# EUROPÄISCHE PATENTANMELDUNG

(11) **EP 0 671 652 A1**
(43) Veröffentlichungstag der Anmeldung: **13.09.1995**
(21) Anmeldenummer: 94103611.3
(22) Anmeldetag: 09.03.1994
(51) Int. Cl.: G03B 21/132, G02F 1/1335

(54) **Flüssigkristallanzeigegerät für den Einsatz mit oder in Overheadprojektoren**

(71) Anmelder: GRUNWALD PROJEKTOREN AG, FL-9491 Ruggell (LI)
(72) Erfinder: Grunwald, Peter H., FL-9491 Ruggell (LI)
(74) Vertreter: Junius, Walther, Dr.

(57) **Zusammenfassung**

Die Erfindung betrifft ein Flüssigkristallanzeigegerät für den Einsatz mit oder in Overheadprojektoren, bestehend aus zwei durchsichtigen Platten (12), die Elektroden tragen und zwischen denen Flüssigkristalle (13) angeordnet sind sowie einem Rahmen, in welchem die durchsichtigen Platten (12) mit den Flüssigkristallen gehaltert sind und der zwei weitere durchsichtige stabile Schutzplatten (14) trägt, welche die Oberfläche dieses Gerätes bilden. Es ist die Aufgabe der Erfindung, mit höchst einfachen Mitteln zu erreichen, daß störende scheinbare Schattenbildungen und Mehrfachabbildungen nicht mehr auftreten. Die Erfindung besteht darin, daß die dem Objektiv (8) zugewandte Platte gegenüber den die Flüssigkristalle (13) zwischen sich aufnehmenden Platten (14) geneigt angeordnet ist. Dabei ist es vorteilhaft, wenn alles oder zumindest möglichst viel an der dem Objektiv (8) zugewandten Platte reflektiertes Licht nicht in das Objektiv des Overheadprojektors eintritt.

## Beschreibung

Die Erfindung betrifft ein Flüssigkristallanzeigegerät für den Einsatz mit oder in Overheadprojektoren, bestehend aus zwei durchsichtigen Platten, die Elektroden tragen und zwischen denen Flüssigkristalle angeordnet sind, sowie einem Rahmen, in welchem die durchsichtigen Platten mit den Flüssigkristallen gehaltert sind und der eine weitere durchsichtige stabile Schutzplatte trägt, welche die Oberfläche dieses Gerätes bildet.

Derartige Flüssigkristallanzeigegeräte für den Durchlichtbetrieb in oder an Overheadprojektoren sind in verschiedenen Ausführungsformen und verschiedenen Anordnungen bekannt geworden und über viele Jahre im Einsatz. Die die Flüssigkristalle zwischen sich einschließenden Platten sind hochempfindlich gegen äußere Einwirkungen und von außen herangetragenen Schmutz und Staub. Deshalb ist mindestens die Oberseite durch eine durchsichtige Schutzplatte abgedeckt, die den Zutritt von Schmutz und Staub zu der Oberseite der die Flüssigkristalle zwischen sich einschließenden Platten verhindert. Eine gleiche Schutzplatte kann die Unterseite der die Flüssigkristalle zwischen sich einschließenden Platten schützen.

Eine Anordnungsmöglichkeit besteht zwischen der Fresnellinse des Overheadprojektors und der die Gehäuseoberfläche des Overheadprojektors bildenden durchsichtigen Schreibplatte des Overheadprojectors, die andere Anordnungsmöglichkeit besteht darin, daß das Flüssigkristallanzeigegerät auf die Schreibplatte des Overheadprojektors aufgelegt ist. Das in beiden Fällen erhaltene Projektionsbild ist nicht klar, es weist scheinbare Schatten und Mehrfachabbildungen einzelner Bildteile im Bild auf, die sich insbesondere bei hellen Darstellungen auf dunkelem Grund unangenehm und störend bemerkbar machen.

Die Erfindung geht von der Erkenntnis aus, daß diese scheinbaren Schattenbildungen und Mehrfachabbildungen die Ergebnisse von Mehrfachreflektionen sind, welche insbesondere an der dem Objektiv zugewandten Schutzplatte erfolgen.

Die Erfindung vermeidet die Nachteile des Standes der Technik. Es ist die Aufgabe der Erfindung, mit höchst einfachen Mitteln zu erreichen, daß die störenden scheinbaren Schattenbildungen und Mehrfachabbildungen nicht mehr auftreten.

Die Erfindung besteht darin, daß die dem Objektiv zugewandte Platte gegenüber den die Flüssigkristalle zwischen sich aufnehmenden Platten geneigt angeordnet ist.

Dabei ist es vorteilhaft, wenn alles oder zumindest möglichst viel an der dem Objektiv zugewandten Platte reflektiertes Licht nicht in das Objektiv des Overheadprojektors eintritt.

Durch diese Anordnung wird in sehr einfacher Weise erreicht, daß die störenden scheinbaren Schattenbildungen und Mehrfachabbildungen nicht mehr auftreten.

Dabei ist es vorteilhaft, wenn der Neigungswinkel 0,5° bis 35°, vorzugsweise 4° bis 5°, beträgt, meist dürfte er im Bereich von 2° bis 10° liegen.

Wird das Flüssigkristallanzeigegerät durch ein Gebläse gekühlt, ist es vorteilhaft, wenn die durch die Neigung entstehende Vergrößerung des Spaltes auf der Seite des Spaltes zwischen der die Elektroden tragenden Platte und der Schutzplatte angeordnet ist, an der Kühlluft in den Spalt eintritt.

Das Wesen der Erfindung ist nachstehend anhand eines in der Zeichnung dargestellten Ausführungsbeispiels näher erläutert. Es zeigen:
- Fig.1: einen Querschnitt durch einen Overheadprojektor mit eingebautem Flüssigkristallanzeigegerät.
- Fig.2: einen Querschnitt durch einen Overheadprojektor mit aufgelegtem Flüssigkristallanzeigegerät.
- Fig.3: einen Querschnitt durch ein Flüssigkristallanzeigegerät.

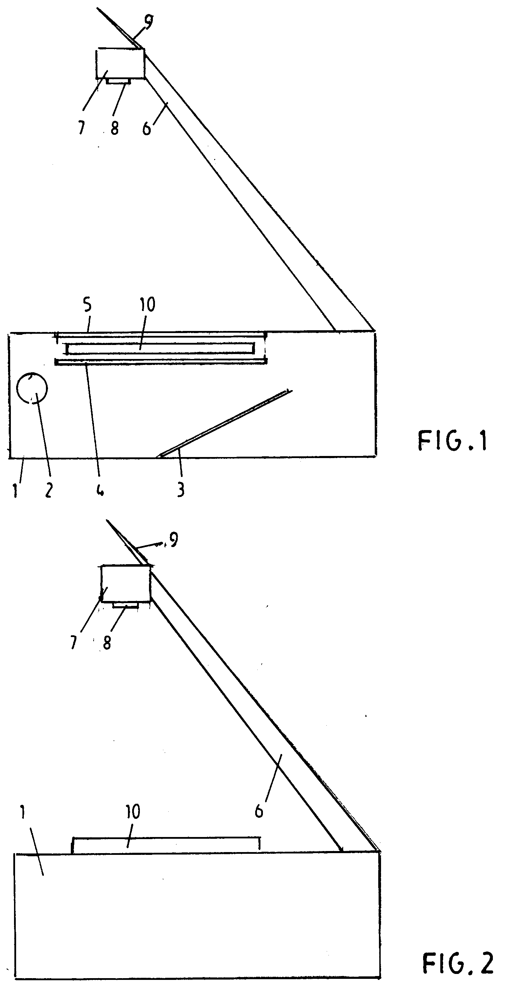

Der Overheadprojektor der Fig.1 und 2 besteht aus einem Gehäuse 1, in welchem eine Lichtquelle 2, ein Umlenkspiegel 3 sowie eine Fresnellinse 4 eingebaut sind und welches nach oben durch eine durchsichtige Schreibplatte 5 abgeschlossen ist, sowie einem Tragarm 6 und einem an diesem befestigten Projektionskopf 7, der Objektiv 8 und einen weiteren Umlenkspiegel 9 trägt.

Das Flüssigkristallanzeigegerät 10 ist im Ausführungsbeispiel der Fig. 1 im Gehäuse 1 zwischen Fresnellinse 4 und Schreibplatte 5 angeordnet. Das Flüssigkristallanzeigegerät ist im Ausführungsbeispiel der Fig. 2 auf die Schreibplatte 5 aufgelegt.

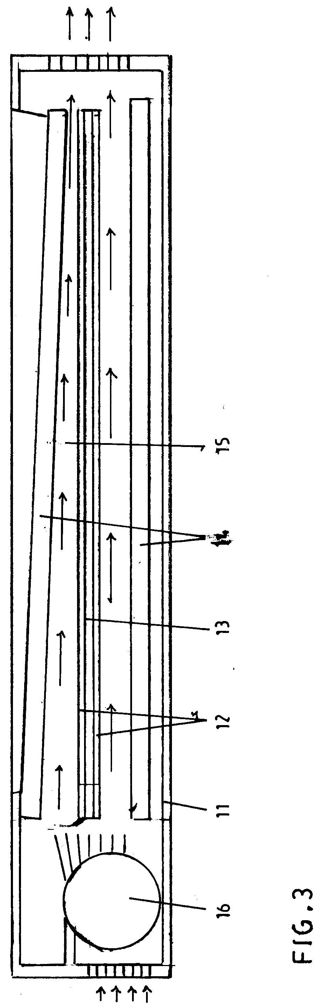

Wie Fig.3 zeigt, besteht das Flüssigkristallanzeigegerät 10 aus einem Rahmen 11, in welchem zwei durchsichtige Platten 12 gehaltert sind, die zwischen sich Flüssigkristalle 13 einschließen. Zu beiden Seiten dieser Flüssigkristalle 13 einschließenden Platten 12 sind zwei weitere durchsichtige Platten als Schutzplatten 14 angeordnet. Die obere, dem Objektiv 8 zugewandte Schutzplatte 14 ist gegenüber den Flüssigkristalle 13 einschließenden Platten 12 geneigt angeordnet. Dabei ist es zweckmäßig, die Flüssigkristalle 13 einschließenden Platten 12 senkrecht zum Mittelstrahl des Strahlenganges anzuordnen. es ist aber auch möglich, die dem Objektiv zugewandte Platte 12 senkrecht zum Mittelstrahl des Strahlenganges anzuordnen.

Ist das Flüssigkristallanzeigegerät durch einen Ventilator 16 gekühlt, ist es zweckmäßig, wenn die durch die Neigung entstehende Vergrößerung des Spaltes 15 auf der Seite des Spaltes 15 zwischen der die Elektroden tragenden Platte 12 und der Schutzplatte 14 angeordnet ist, an der Kühlluft in den Spalt 15 eintritt.

Die Erfindung läßt sich an allen Typen von Overheadprojektoren zur Anwendung bringen, auch solchen die andere Projektionsköpfe mit anderen Objektiv- und Umlenkspiegelanordnungen aufweisen, auch an solchen, die einen anderen Aufbau im Inneren des Gehäuses aufweisen, bei denen z.B. kein Umlenkspiegel im Gehäuse vorgesehen ist, sondern die Beleuchtung ohne Umlenkung direkt durch die Schreibplatte erfolgt.

### Liste der Bezugszeichen

- 1: Gehäuse
- 2: Lichtquelle
- 3: Umlenkspiegel
- 4: Fresnellinse
- 5: Schreibplatte
- 6: Tragarm
- 7: Projektionskopf
- 8: Objektiv
- 9: Umlenkspiegel
- 10: Flüssigkristallanzeigegerät
- 11: Rahmen
- 12: Platte
- 13: Flüssigkristalle
- 14: Schutzplatte
- 15: Spalt
- 16: Ventilator

## Patentansprüche

1. Flüssigkristallanzeigegerät für den Einsatz mit oder in Overheadprojektoren,
bestehend aus zwei durchsichtigen Platten (12), die Elektroden tragen und zwischen denen Flüssigkristalle (13) angeordnet sind, sowie einem Rahmen (11), in welchen die durchsichtigen Platten (12) mit den Flüssigkristallen (13) gehaltert sind und der mindestens eine weitere durchsichtige stabile Schutzplatte (14) trägt, welche die Oberfläche dieses Gerätes bilden,
dadurch gekennzeichnet,
daß die dem Objektiv (8) des Overheadprojektors zugewandte Schutzplatte (14) gegenüber den die Flüssigkristalle (13) zwischen sich aufnehmenden Platten (12) geneigt angeordnet ist.

2. Flüssigkristallanzeigegerät nach Anspruch 1,
dadurch gekennzeichnet,
daß die Neigung der Schutzplatte (14) so gewählt ist, daß alles oder zumindest möglichst viel an der dem Objektiv (8) zugewandten Schutzplatte (14) mehrfach reflektiertes Licht nicht in das Objektiv (8) des Overheadprojektors eintritt.

3. Flüssigkristallanzeigegerät nach Anspruch 1,
dadurch gekennzeichnet,
daß der Neigungswinkel 2° bis 15° beträgt.

4. Flüssigkristallanzeigegerät nach Anspruch 1,
dadurch gekennzeichnet,
daß die durch die Neigung entstehende Vergrößerung des Spaltes (15) auf der Seite des Spaltes (15) zwischen der die Elektroden tragenden und die Flüssigkristalle (13) einschließenden Platte (12) und der Schutzplatte (14) angeordnet ist, an der Kühlluft in den Spalt (15) eintritt.
